Europäisches Patentamt

European Patent Office

Office européen des brevets

(11) Publication number: **0 061 876**
**A1**

## (12) EUROPEAN PATENT APPLICATION

(21) Application number: **82301439.4**

(22) Date of filing: **19.03.82**

(51) Int. Cl.³: **A 01 N 25/12**
A 01 N 25/08, D 06 M 16/00
A 01 N 37/08, A 01 N 43/30
A 01 N 57/10, A 01 N 47/12

(30) Priority: **26.03.81 US 247681**

(43) Date of publication of application:
**06.10.82 Bulletin 82/40**

(84) Designated Contracting States:
**AT BE CH DE FR GB IT LI LU NL SE**

(71) Applicant: **A.H. ROBINS COMPANY, INCORPORATED**
**1407 Cummings Drive**
**Richmond Virginia 23220(US)**

(72) Inventor: **Corrigan, Eugene James**
**12831 Percival Street**
**Chester Virginia 23831(US)**

(72) Inventor: **Greenberg, Jack**
**1601 Treboy Avenue**
**Richmond Virginia 23226(US)**

(74) Representative: **Kearney, Kevin David Nicholas et al,**
**KILBURN & STRODE 30 John Street**
**London, WC1N 2DD(GB)**

(54) Compositions in powder form containing pesticides and suitable for treatment of household furnishings.

(57) A composition in powder form suitable for treatment of household furnishings, such as carpets, rugs, upholstery, floors, and the like, and readily removable therefrom which comprises an inorganic salt carrier, an agglomerating agent and a pesticidal agent capable of killing arthropods such as ticks, fleas, silver fish, cockroaches and the like. Other optional ingredients such as fragrances, anti-static agents, anti-soiling agents, deodorizers and the like may be conveniently included in the composition.

EP 0 061 876 A1

1.

"COMPOSITIONS IN POWDER FORM CONTAINING
PESTICIDES AND SUITABLE FOR TREATMENT OF
HOUSEHOLD FURNISHINGS"

TECHNICAL FIELD

The present invention relates to compositions for use in the control of arthropods, such as ticks, fleas, silver fish, and cockroaches, in household furnishings by the application thereto of an appropriate pesticidal agent. More particularly, this invention relates to novel compositions in powder form which contain a pesticidal agent and which may be readily applied to and removed from household furnishings, such as upholstery, floors and floor coverings such as carpets and rugs.

BACKGROUND ART

Heretofore, pesticidal-type agents have been used in the treatment of carpets, fabrics, upholstery, and the like, to permanently treat such material for protection of the material against deleterious agents such as fungi, mould, and insects. Powdered compositions for treating carpets to provide deodorizing and/or freshening effects thereto are also known.

U.S. Patent No. 2,119,458 provides a process for fixing or depositing certain water-insoluble insecticides to material such as carpets, rugs, paper, woollen goods or furs in order to provide life-long protection to the material so treated.

U.S. Patent No. 3,122,502 provides a softener-germicide liquid preparation for the treatment of and protection of fabrics.

U.S. Patent No. 3,134,738 discloses the treatment of rugs, fabrics, and the like, with cleaning solutions containing insecticides or pesticides to prevent attack

2.

on the material by moths or the like in addition to cleaning the material so treated.

U.S. Patent No. 3,230,141 provides for the treatment of keratin fibres with certain insecticides and bactericides to provide permanent protection against damage from moths, beetles and the like.

U.S. Patent No. 3,317,372 provides for the treatment of rugs, upholstery, fabrics and the like with bactericidal and fungicidal agents to prevent formation of odoriferous products by fungi and moulds.

U.S. Patent No. 4,161,449 provides powdered carpet compositions comprising a carrier, an agglomerating agent and a fragrance in a form for ready application to the carpet to provide deodorizing and/or freshening effects thereto.

DISCLOSURE OF THE INVENTION

This invention provides a novel composition in powder form for the control of arthropods, such as fleas, ticks, centipedes, ants, cockroaches and other crawling insects, in household furnishings, such as floors, upholstery, floor coverings such as carpets and rugs. The powdered composition comprises an inorganic salt carrier, an agglomerating agent and a pesticide. Other optional ingredients such as fragrances, anti-static agents, deodorizers and anti-soiling agents may be conveniently included in the compositions. The compositions may be used to control such arthropods by sprinkling the compositions on the fabric floor covering, allowing it to remain for a period of time necessary to kill any arthropods present, usually a period of 12 to 120 minutes, and then removing the compositions and arthropods by vacuuming the treated area.

The inorganic salt carrier will normally be present in the composition in an amount of from about 30 to 95 percent by weight and preferably in an amount of from about 75 to 90 percent by weight. The carrier is selected from inorganic salts such as sulphate, bicarbonates, borates, chlorides, citrates, phosphates and nitrates and combinations thereof. The preferred carriers are the sodium salts of the sulphates and bicarbonates and combinations thereof. Aluminium, calcium, magnesium and other metal salts may also be used. It is necessary that the carrier be capable of existing in agglomerated form to assist in the application of the composition on the floor covering surface without excessive dusting and to provide for even distribution of the composition thereon and the subsequent removal thereof. In order to provide the above discussed characteristics to the compositions, the particle size of the carrier should be such that substantially all of the particles fall within the range of about 0.075 to 0.475 mm.

The agglomerating agent is necessary in the compositions in order to assure the agglomeration of the particles to provide the necessary characteristics to achieve the purpose desired; i.e. the compositions must remain in the area of contact on the floor covering and be of a nature that will allow the particles to sit on top of the fabric or fibres for ready removal therefrom.

4.

The agglomerating agent will be present in the composition in an amount of from about 1.0 to about 20.0
percent by weight and preferably in an amount of from
about 4.5 to about 10.0 percent by weight. Agglomerating agents which may be conveniently used for the
purposes of this invention include starch, talc, clay,
silica powders, grain flours and wood flours. Starch is
the preferred agglomerating agent suitable for use in
the compositions of this invention.

The pesticidal agent which is the critical component of the compositions of this invention may be
selected from any conventional pesticidal agent which
is capable of controlling and killing arthropods such
as might be found in fabric floor coverings. The
pesticidal agent is present in the composition in an
amount of from about 0.05 to about 7.5 percent by weight
and preferably in an amount of from about 0.10 to about
6.0 percent by weight. Pesticidal agents which may
conveniently be used for the purposes of this invention
include organophosphates, thiophosphates, carbamates,
synthetic pyrethoids, and natural pyrethrums. Combinations of two or more pesticidal agents may also be used
for the purpose of this invention. Illustrative of
suitable pesticidal agents are chlorinated hydrocarbons,
non-volatile carbamates such as 1-naphthyl-N-methylcarbamate, and 2-isopropoxyphenyl-N-methylcarbamate;
pyrethrins derived from flowers of pyrethrins cinerae-
folium and comprising esters of pyrethrolone and
chrysanthemic and pyrethroic acids, esters of cinerolone
and chrysanthemic and pyrethroic acids, and esters of jasmoline and chrysanthemin and pyrethroic acids; 3-(phenoxyphenyl)methyl (±) cis, trans-3-(2,2-dichloroethenyl)-2,2-dimethylcyclopropanecarboxylate; 3-phenoxybenzyl d-cis, trans-2,2-dimethyl-3-(2-methylpropenyl)-cyclopropanecarboxylate; (1-cyclohexane-1,2-dicarboximido) methyl 2,2-dimethyl-3-(2-methyl propenyl)-cyclopropane-carboxylate; phosphates such as 2-chloro-1-(2, 4,5-trichlorophenyl)-vinyl dimethylphosphate, dimethyl-1,2-dibrom-2,2-dichloroethyl phosphate, and dimethyl 2,2-dichlorovinyl phosphate, and piperonyl butoxide. It is preferred that the pesticidal agent be a liquid which is absorbed by the solid components of the composition to provide improved results when applied to the surface being treated therewith.

In addition to the three essential components of the compositions of this invention, other conventional ingredients may be included if desired. Such ingredients include fragrances, anti-static agents, anti-soiling agents, and deodorizers.

The compositions of this invention may be prepared using any conventional blending technique. Preferably, the pesticidal agent will be blended with a portion of the carrier, up to about 50% by weight thereof, and then this mixture will be mixed with the remaining amount of carrier, agglomerating agent and any optional additives desired.

BEST MODE FOR CARRYING OUT THE INVENTION

The invention may be put into practice in various ways and a number of specific embodiments will be described to illustrate the invention with reference to the accompanying Examples.

6.

EXAMPLE 1

The following ingredients were blended by conventional dry-blending techniques to provide a composition in accordance with the present invention:

| Ingredient | Percent by Weight |
|---|---|
| Sodium sulphate | 44.35 |
| Sodium bicarbonate | 44.35 |
| Starch | 6.5 |
| Sodium benzoate | 0.20 |
| Perfume | 0.20 |
| Propylene glycol | 2.00 |
| Water | 1.00 |
| Pesticidal agent[1] | 2.00 |

[1] Multicide 2167, a composition sold by McLaughlin Gormly King Company, Minneapolis, Minnesota containing 2% by weight of (1-cyclohexane-1,2-dicarboximido)methyl 2,2-dimethyl-3-(2-methylpropenyl)-cyclopropanecarboxylate; 3.83% by weight of 3-phenoxybenzyl d-cis, trans-2,2-dimethyl-3-(2-methylpropenyl)cyclopropanecarboxylate; and 0.17% by weight of other isomers of 3-phenoxybenzyl d-cis, trans-2,2-dimethyl-3-(2-methylpropenyl)-cyclopropanecarboxylate.

The efficacy of the above composition was determined by the following procedure. Ten cat fleas (Ctenocephalides felis) were placed in a line-litre jar and 1.75 grams of the above composition added. The number of live fleas were counted at intervals of 5 minutes following the addition of the composition. The experiment was duplicated with a similar composition containing no pesticidal agent. The results obtained

7.

for the average of four replicates are shown in the Table 1.

TABLE 1

|  | Live Fleas | |
|---|---|---|
| Time, Minutes | Composition containing Pesticidal Agent | Composition Without Pesticidal Agent |
| 0 | 10 | 10 |
| 5 | 8 | 9.75 |
| 10 | 2.25 | 9.75 |
| 15 | 1.25 | 9.75 |
| 20 | 0.75 | 9.75 |
| 25 | 0.50 | 9.75 |
| 30 | 0.25 | 9.75 |
| 35 | 0.0 | 9.75 |

$LT_{90}$ = 29.9 minutes. ($LT_{90}$ = lethal time in minutes to kill 90% of test arthropods).

Efficacy of the above composition was determined for controlling brown dog ticks (Rhipicephalus sanguineus), silverfish (Lepisma saccharina), ants (Crematogastor lineoeta) and german cockroaches (Blattella germanica) using the same procedure described above. The following tables indicate the results obtained for the average of four replicates.

8.

TABLE 2

|  | Live Ticks | |
| Time, Minutes | Composition Containing Pesticidal Agent | Composition Without Pesticidal Agent |
|---|---|---|
| 0 | 10 | 10 |
| 5 | 10 | 10 |
| 10 | 10 | 10 |
| 15 | 7.5 | 10 |
| 20 | 6.75 | 10 |
| 25 | 5.5 | 10 |
| 30 | 5.5 | 10 |
| 35 | 4.5 | 10 |
| 40 | 2.5 | 10 |
| 45 | 1.25 | 10 |
| 50 | 0.25 | 10 |
| 55 | 0.0 | 10 |

$LT_{90} = 52.2$

TABLE 3

|  | Live Silverfish | |
| Time, Minutes | Composition Containing Pesticidal Agent | Composition Without Pesticidal Agent |
|---|---|---|
| 0 | 10 | 10 |
| 5 | 6 | 10 |
| 10 | 1.75 | 10 |
| 15 | 0.25 | 10 |
| 20 | 0.0 | 10 |

$LT_{90} = 15.1$

9.

### TABLE 4

| Time, Minutes | Live Ants | |
| --- | --- | --- |
| | Composition Containing Pesticidal Agent | Composition Without Pesticidal Agent |
| 0 | 10 | 9.75 |
| 5 | 5.75 | 9.75 |
| 10 | 2.25 | 9.75 |
| 15 | 0.0 | 9.75 |

$LT_{90}$ = 12.7

### TABLE 5

| Time, Minutes | Live Cockroaches | |
| --- | --- | --- |
| | Composition Containing Pesticidal Agent | Composition Without Pesticidal Agent |
| 0 | 10 | 10 |
| 5 | 10 | 10 |
| 10 | 10 | 10 |
| 15 | 0 | 10 |

$LT_{90}$ = 18.3

### EXAMPLE 2

Following the procedure of Example 1, a composition having the following ingredients was prepared.

| Ingredient | Percent by Weight |
| --- | --- |
| Sodium sulphate | 44.0 |
| Sodium bicarbonate | 44.0 |
| Starch | 6.56 |

| | |
|---|---|
| Sodium benzoate | 0.2 |
| Perfume | 1.27 |
| Propylene glycol | 2.69 |
| Water | 1.0 |
| Pesticidal agent[1] | 0.28 |
| | 100.00 |

[1] 3-(Phenoxyphenyl)methyl ($\pm$) cis, trans-3-(2,2-dichloroethenyl)-2,2-dimethylcyclopropanecarboxylate.

Efficacy of the above composition was determined by the following procedure. Ten cat fleas (Ctenocephalides felis) were placed on top of a nylon pile carpet within a 1 litre chamber and 0.35 gram of the above composition was added to the chamber and the number of dead fleas counted at 15 minute intervals. The experiment was duplicated with 0.35 gram of a similar composition containing no pesticidal agent. The results obtained for the average of four replicates are given in the following Table 6.

TABLE 6

| Time, Minutes | Live Fleas | |
|---|---|---|
| | Composition Containing Pesticidal Agent | Composition Without Pesticidal Agent |
| 0 | 10 | 10 |
| 15 | 9 | 10 |
| 30 | 7.25 | 10 |
| 45 | 1.5 | 10 |
| 60 | 0.5 | 10 |
| 120 | 0.0 | 10 |

11.

EXAMPLES 3A to 3D

Following the procedure of Example 1, a composition having the following ingredients was prepared.

| Ingredient | Percent by Weight |
|---|---|
| Sodium sulphate | 42.0 |
| Sodium bicarbonate | 45.1 |
| Starch | 6.5 |
| Zeolex 23A (Sodium Aluminium Silicate) | 1.0 |
| Fragrance | 1.75 |
| Propylene glycol | 2.0 |
| Permethrin, Techn. [1] | 0.33 |
| Piperonyl Butoxide | 1.32 |

[1] 3-(Phenoxyphenyl)methyl ($\pm$) cis, trans-3-(2,2-dichloroethanyl)-2,2-dimethylcyclopropanecarboxylate.

Efficacy of the above composition was determined by the following procedure. Nylon carpet circles were placed in the bottom of one litre jars, 0.25 gm of the composition was added to eight jars (Example 3A), 0.20 gm was added to eight jars (Example 3B) and 0.15 gm (Example 3C) was added to eight jars. 0.25 grams of a composition similar to the above but with no active pesticidal agent was added to eight jars (Example 3D). Ten cat fleas (Ctenocephalides felis) were added to each of the four of the jars containing the placebo, 0.25 grams, 0.20 grams, and 0.15 grams of the composition. Ten brown dog ticks (Rhepecephalus sanquineus) were added to each of four of the jars containing placebo, 0.25 grams, 0.20 grams and 0.15 grams of the composition. The number of dead fleas and ticks was counted

12.

at 15 minute intervals.  The results obtained for the average of four replicates are given in Tables 7 and 8.

TABLE 7

| Time, Minutes | Control | Live Fleas | | |
| --- | --- | --- | --- | --- |
| | | Weight of Pesticidal Compositions | | |
| | | 0.15 gms | 0.20 gms | 0.25 gms |
| 0 | 10 | 10 | 10 | 10 |
| 15 | 10 | 9.75 | 9.75 | 9.50 |
| 30 | 10 | 4.25 | 0.0 | 0.0 |
| 45 | 10 | 0.0 | 0.0 | 0.0 |
| 60 | 10 | 0.0 | 0.0 | 0.0 |

TABLE 8

| Time, Minutes | Control | Live Ticks | | |
| --- | --- | --- | --- | --- |
| | | Weight of Pesticidal Composition | | |
| | | 0.15 | 0.20 | 0.25 |
| 0 | 10 | 10 | 10 | 10 |
| 15 | 10 | 10 | 10 | 10 |
| 30 | 10 | 10 | 10 | 9.0 |
| 45 | 10 | 10 | 9.75 | 1.0 |
| 60 | 10 | 9.0 | 9.0 | 2.0 |
| 75 | 9.75 | 6.5 | 4.75 | 1.25 |
| 90 | 9.5 | 4.5 | 3.5 | 0.75 |
| 105 | 9.5 | 0.5 | 0.25 | 0.50 |
| 120 | 9.5 | 0.0 | 0.0 | 0.0 |

EXAMPLES 4A to 4E

The following compositions may be prepared following the procedure of Example 1 and would be suitable for the purpose of this invention.

| Ingredient | Percent by Weight | | | | |
|---|---|---|---|---|---|
| | A | B | C | D | E |
| Sodium sulphate | 43.1 | 44.1 | 48.0 | 47.0 | 48.0 |
| Sodium bicarbonate | 43.1 | 39.1 | 40.1 | 40.1 | 39.9 |
| Starch | 6.6 | 6.6 | 6.6 | 6.6 | 6.6 |
| Sodium benzoate | 0.2 | 0.2 | 0.2 | 0.2 | 0.2 |
| Propylene glycol | 2.0 | 2.0 | 2.0 | 2.0 | 2.0 |
| Water | 1.0 | 1.0 | 1.0 | 1.0 | 1.0 |
| Fragrance | 2.0 | 2.0 | - | 2.0 | 2.0 |
| Pesticidal agent[1] | 2.0 | - | - | - | - |
| Pesticidal agent[2] | - | 5.0 | - | - | - |
| Pesticidal agent[3] | - | - | 0.1 | 0.1 | - |
| Pesticidal agent[4] | - | - | - | - | 0.30 |
| Deodorizer agent[5] | - | - | 1.0 | - | - |
| Pesticidal agent[6] | - | - | 1.0 | 1.0 | - |
| Total | 100.0 | 100.0 | 100.0 | 100.0 | 100.0 |

[1] 2-Chloro-1-(2,4,5-trichlorophenyl)-vinyl dimethyl phosphate.

[2] 1-Naphthyl-N-methylcarbamate.

[3] Pyrethrin.

[4] 3-Phenoxyphenylmethyl (±) cis, trans-3-(2,2-dichloroethenyl)-2,2 dimethylcyclopropane carboxylate.

[5] Meelium. (a blend of neutralized hydroaromatic sulphonates, unsulphonated hydrocarbons, water and sodium sulphate supplied by Prestiss Drug and Chemical Co.)

[6] Piperonyl butoxide.

14.

## CLAIMS

1. A composition, in powder form, suitable for treatment of household furnishings, which comprises an inorganic salt carrier, an agglomerating agent, and an amount of a pesticidal agent sufficient to control arthropods in the said furnishings.

2. A composition as claimed in Claim 1 in which the pesticidal agent is present in an amount of from about 0.05 percent by weight to about 7.5 percent by weight.

3. A composition as claimed in Claim 1 or Claim 2 in which the pesticidal agent is a blend comprising 3-phenoxybenzyl d-cis, trans-2,2-dimethyl-3-(2-methyl propenyl)-cyclopropanecarboxylate and (1-cyclohexane-1, 2-dicarboximide)-methyl-2,2-dimethyl-3-(2-methylpropenyl)-cyclopropanecarboxylate.

4. A composition as claimed in Claim 1 or Claim 2 in which the pesticidal agent is 3-(phenoxyphenyl)methyl (±) cis, trans-3-(2,2-dichloroethanyl)-2,2-dimethylcyclopropanecarboxylate.

5. A composition as claimed in Claim 1 or Claim 2 in which the pesticidal agent is a blend of 3-(phenoxyphenyl)methyl (±) cis, trans-3-(2,2-dichloroethanyl)-2, 2-dimethylcyclopropanecarboxylate and piperonyl butoxide.

6. A composition as claimed in Claim 1 or Claim 2 in which the pesticidal agent is a non-volatile carbamate.

7. A composition as claimed in Claim 1 or Claim 2 in which the pesticidal agent is a phosphate.

8. A pesticidal composition, in powder form, suitable for treatment of household furnishings which comprises A) as an inorganic salt carrier in an amount of 30 to 95% by weight a sulphate, bicarbonate, borate, chloride, citrate, phosphate or nitrate or a mixture thereof, having a particle size such that substantially all of the particles fall within the range 0.075 to 0.475 mms, B) as an agglomerating agent in an amount of 1 to 20% by weight a starch, talc, clay, silica powder, grain flour or wood flour or mixtures thereof, and C) as a pesticidal agent in an amount of 0.05 to 7.5% by weight, (1-cyclohexane-1,2-dicarboximido)methyl 2,2-dimethyl-3-(2-methylpropenyl)-cyclopropanecarboxylate; 3-phenoxybenzyl d-cis, trans-2,2-dimethyl-3-(2-methyl-propenyl)-cyclopropanecarboxylate; isomers of 3-phenoxybenzyl d-cis, trans-2,2-dimethyl-3-(2-methylpropenyl)-cyclopropanecarboxylate; 3-(phenoxyphenyl)methyl (±) cis, trans-3-(2,2-dichloroethenyl)-2,2-dimethylcyclopropanecarboxylate; piperonyl butoxide; 2-chloro-1-(2, 4,5-trichlorophenyl)-vinyl dimethyl phosphate; 1-naphthyl-N-methylcarbamate; pyrethrin; 3-phenoxyphenyl-methyl (±) cis, trans-3-(2,2-dichloroethenyl)-2,2-dimethylcyclopropane carboxylate; a neutralixed hydro-aromatic sulphonate, or mixtures thereof.

16.

9.  A pesticidal composition as claimed in Claim 8
in which ingredient A is present in an amount of 83 to
88% and is a mixture of sodium sulphate and sodium
bicarbonate, ingredient B comprises starch in an amount
of 6.5 to 6.6% and ingredient C is present in an amount
of 0.1 to 5%.


                        KILBURN & STRODE
                      Chartered Patent Agents
                    Agents for the Applicants.

## DOCUMENTS CONSIDERED TO BE RELEVANT

| Category | Citation of document with indication, where appropriate, of relevant passages | Relevant to claim | CLASSIFICATION OF THE APPLICATION (Int. Cl 3) |
|---|---|---|---|
| D,Y X | US-A-4 161 449 (J.A. SMITH et al.) * the whole document * | 1,8,9 | A 01 N 25/12 A 01 N 25/08 D 06 M 16/00 A 01 N 37/08 A 01 N 43/30 |
| Y,X | US-A-3 595 958 (T.H. KOUNDAKJIAN et al.) * the whole document * | 1,2,7- 9 | A 01 N 57/10 A 01 N 47/12 |
| Y,X | C.R. WORTHING: "The Pesticide Manual", 6th edition, 1979, British Crop Protection Council, Croydon (GB) * pages 79,409,410,459,460 * | 3-6 | |

TECHNICAL FIELDS SEARCHED (Int Cl. 3)

A 01 N
D 06 M

The present search report has been drawn up for all claims

| Place of search | Date of completion of the search | Examiner |
|---|---|---|
| THE HAGUE | 30-06-1982 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82